# EUROPEAN PATENT APPLICATION

(11) **EP 2 584 435 A2**
(43) Date of publication of application: **24.04.2013**
(21) Application number: 12188328.4
(22) Date of filing: 12.10.2012
(51) Int. Cl.: G06F 3/0354, G06F 3/01

(54) **Input Device**

(30) Priority: 20.10.2011 JP 2011230828
(71) Applicant: Alps Electric Co., Ltd., Tokyo 145-8501 (JP)
(72) Inventor: Onodera, Mikio, Tokyo, Tokyo 145-8501 (JP)
(74) Representative: Klunker . Schmitt-Nilson . Hirsch

(57) **Abstract**

An operation body (2), which includes an operation surface (3) of a hemispherical surface, is supported so as to be capable of tilting by only a slight angle (α). Continuous vibration of which the amplitude (F) is parallel to a vertical direction is applied to the operation body (2) by a vibrating unit. When a finger (30) comes into contact with the operation surface (3), an amplitude component (Fs) parallel to a tangent line (S) is generated at a contact portion (T) of the finger (30) by the continuous vibration. Accordingly, when the finger (30) is moved, it is possible to obtain a feeling as though the operation surface (3) is rotated following the movement of the finger (30).

## Description

### CLAIM OF PRIORITY

This application claims benefit of Japanese Patent Application No. 2011-230828 filed on October 20, 2011, which is hereby incorporated by reference.

### BACKGROUND OF THE INVENTION

### 1. Field of the Invention

The present invention relates to an input device which includes an operation body restricted so as to be fixed or only move by a limited distance and to which an input operation is performed by the sliding of a finger on the operation surface of the surface of the operation body, and more particularly, to an input device giving a feeling to a finger as though an operation surface is moved when the finger slides along the operation surface.

### 2. Description of the Related Art

Input devices, which include operation bodies operated by a finger and vibrating units applying an impact force or vibration to the operation bodies, are disclosed in Japanese Unexamined Patent Application Publication Nos. 11-305938 and 2003-337649.

A trackball device disclosed in Japanese Unexamined Patent Application Publication No. 11-305938 includes a ball that freely rotates in multiple directions, an encoder that detects the rotational direction and the rotational distance of the ball, and a solenoid that applies a force to the ball. While the ball is operated, a force is irregularly (aperiodically) applied to the ball from the solenoid. Accordingly, it is possible to feel the force of the solenoid through a finger that operates the ball.

The trackball device disclosed in Japanese Unexamined Patent Application Publication No. 11-305938 can select items displayed on a screen or move a scrollbar displayed on a screen by rotating a ball with a finger. Further, when the selected item is changed, a momentary force is applied to the ball from the solenoid. Alternatively, when the scrollbar reaches the movement end of the scrollbar, a momentary force is applied to the ball from the solenoid.

An input device disclosed in Japanese Unexamined Patent Application Publication No. 2003-337649 includes a ring-shaped or linear recess and electrodes of which the capacitances are coupled. When a finger is moved along the recess while contacting the recess, the position and movement of the finger are detected by the electrodes. That is, the recess itself, which is an operation body, does not move and the finger comes into contact with and slides on the recess, so that an input operation is performed.

The input device is provided with a vibrator. Accordingly, when the finger in contact with the recess moves by only a constant distance, a pulse is sent to the vibrator, the vibrator temporarily vibrates, and temporary vibration is applied to the recess. Therefore, a click feeling is given to the finger in contact with the recess, so that an operator can perceive that the finger moves by a constant distance.

Since the trackball device disclosed in Japanese Unexamined Patent Application Publication No. 11-305938 uses a method where the ball is rotated by a finger, the trackball device requires a mechanism by which the ball is rotatably supported. For this reason, the structure of the trackball device is complicated. Further, since the trackball device requires a height exceeding the diameter of the ball, it is not possible to mount the trackball device on a thin device. Furthermore, there is a defect that dirt or dust adhering to the ball easily enters the device due to the rotation of the ball.

Since the input device disclosed in Japanese Unexamined Patent Application Publication No. 2003-337649 uses a method where a finger comes into contact with the ring-shaped or linear recess and slides on the surface of the recess, the input device does not require a rotation support mechanism. For this reason, it is easy to make the input device thin overall. However, since a frictional reaction force is applied to a finger when the finger comes into contact with and slides on the recess, the operation feeling is inferior to a case where a ball actually rotates. Further, since a finger merely slides two-dimensionally to perform an operation, it is not possible to perform an operation for three-dimensionally moving a finger. For this reason, it is difficult to cope with the diversity of input operations.

The trackball device disclosed in Japanese Unexamined Patent Application Publication No. 11-305938 is provided with the solenoid that applies a force to the ball, and the input device disclosed in Japanese Unexamined Patent Application Publication No. 2003-337649 is provided with the vibrator that applies vibration to the recess. However, the solenoid irregularly generates a force when items displayed on the screen are changed. Further, the vibrator applies a momentary vibration when the finger moves by a constant distance, and the generation interval of vibration is changed according to the moving speed of the finger sliding on the recess. Accordingly, the vibrator can merely generate an irregular vibration.

### SUMMARY OF THE INVENTION

The present invention provides an input device that includes an operation body not capable of moving or merely capable of moving by a limited distance when an operation surface is operated by a finger and can provide a feeling to a finger as though an operation surface is moved when the finger slides on the operation surface.

According to an aspect of the invention, there is provided an input device that includes an operation body and a detecting member. The operation body includes an operation surface with which a finger comes into contact, and the detecting member detects the operating state of the operation surface operated by the finger. The operation body is fixed so as not to move when the finger in contact with the operation surface moves along the operation surface or the movement of the operation body is restricted so as to only move by a distance shorter than a movement distance of the finger that moves along the operation surface. The input device includes a vibration applying mechanism that continues applying a continuous vibration having a predetermined frequency to the operation body while at least the finger comes into contact with the operation surface.

In the input device according to the aspect of the invention, the operation body generates a continuous vibration having a predetermined frequency when a finger slides on the operation surface of the surface of the operation body which is fixed or of which the movement is restricted. For this reason, a frictional force between the operation surface and a finger is reduced. Accordingly, it is possible to reduce the resistance force that is felt by a finger when the finger slides on the operation surface. Therefore, it is possible to obtain a feeling as though the finger and the operation surface move, and to improve operability.

Further, since the operation body is fixed or the movement of the operation body is restricted, a support mechanism for moving the operation body is not required. Accordingly, there is no problem of dirt or dust adhering to the ball entering the device due to the rotation of the ball as in the trackball device in the related art.

In the aspect of the invention, the operation surface may have the shape of a protrusion that protrudes in a direction in which the operation surface faces to the finger, and for example, the operation surface may be a part of a spherical surface.

Alternatively, the operation surface may have a concave shape that is recessed in a direction opposite to a direction in which the operation surface faces to the finger, and the operation surface may have a substantially flat shape.

In the aspect of the invention, the operation surface may be supported by an elastic body so as to only move by the distance shorter than the movement distance of the finger.

The input device according to the aspect of the invention may further include a controller that generates the continuous vibration using the vibration applying mechanism by controlling the vibration applying mechanism and applies an irregular vibration to the operation body from the vibration applying mechanism when a predetermined operation is performed by the finger.

In the aspect of the invention, a continuous vibration, which includes an amplitude component parallel to a movement direction of the finger on the operation surface, may be applied to the operation body from the vibration applying mechanism.

For example, the operation surface may include an inclined surface, which is inclined with respect to the direction of the amplitude of the continuous vibration applied to the operation body from the vibration applying mechanism, on at least a part thereof.

The detecting members may be pressure sensors detecting that the operation surface is pushed by the finger. Alternatively, the detecting members may be electrostatic sensors that detect the approach and movement of the finger.

Even though the operation body cannot freely move, the input device according to the aspect of the invention can obtain an operation feeling as though the operation surface follows a finger by reducing a resistance force when a finger slides on the operation surface of the surface of the operation body.

Further, since a support mechanism by which the operation body is rotatably supported is not required, it is possible to simplify the structure of the input device and it is easy to make the input device thin.

### BRIEF DESCRIPTION OF THE DRAWINGS

Fig. 1 is a perspective view of an input device according to a first embodiment of the invention;
Fig. 2 is a longitudinal cross-sectional view of the input device shown in Fig. 1;
Fig. 3 is a plan view of electrostatic sensors provided in the input device shown in Fig. 1;
Fig. 4 is a view illustrating the operation of the input device shown in Fig. 1;
Fig. 5 is a view showing the configuration of a circuit of the input device;
Fig. 6 is a cross-sectional view of an input device according to a second embodiment of the invention;
Fig. 7 is a cross-sectional view of an input device according to a third embodiment of the invention; and
Fig. 8 is a cross-sectional view of an input device according to a fourth embodiment of the invention.

### DESCRIPTION OF THE PREFERRED EMBODIMENTS

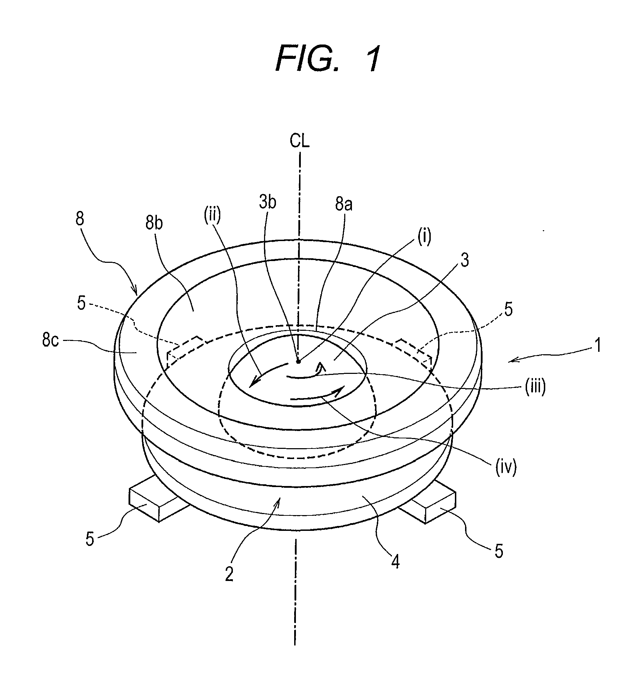

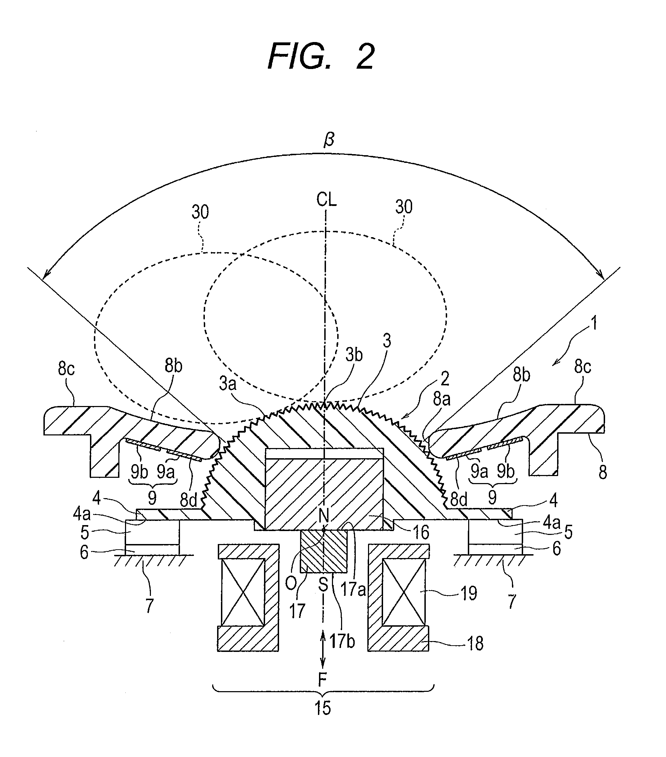

An input device 1 shown in Figs. 1 and 2 includes an operation body 2. The operation body 2 is made of a synthetic resin or metal. The operation body 2 has a protrusion-shaped operation surface 3 of which the surface shape is formed of a part of the shape of a spherical surface. The operation surface 3 is formed at an angle smaller than 360°, which is an angle corresponding to the entire circumference of the surface of a spherical body. In an example shown in Fig. 2, the operation surface 3 has substantially half of the area of the surface of the spherical body. Since the operation surface 3 has a fine uneven surface 3a on the surface thereof, the coefficient of friction can be reduced when a finger 30 comes into contact with the operation surface.

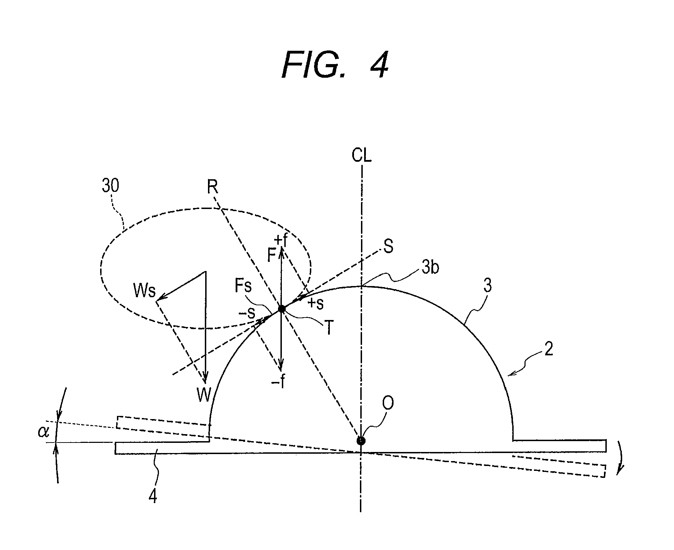

The operation body 2 may be fixed so as not to be capable of moving, but is adapted to be capable of tilting in all directions by an angle α as shown in Fig. 4 in the input device 1 according to an embodiment. The angle α by which the operation body 2 can tilt has a value that is sufficiently smaller than an angle range β where the operation surface 3 can be operated by a finger 30. The angle α is preferably 5° or less and more preferably 3° or less.

The operation body 2 includes a flange portion 4. A center line CL, which passes through the center 0 of curvature of the spherical surface forming the operation surface 3 and extends in the vertical direction, is shown in Fig. 2. However, the flange portion 4 is continuously formed in the direction perpendicular to the center line CL over the entire circumference corresponding to 360° around the center line CL.

Elastic members 6 are fixed to a base 7 of the input device 1, pressure sensors 5, which are first detecting members, are fixed to the surfaces of the elastic members 6, and a lower surface 4a of the flange portion 4 of the operation body 2 is installed on the pressure sensors 5. The elastic member 6 is a synthetic rubber sheet or a sheet made of a foamed resin material. The pressure sensor 5 is a MEMS sensor, and is provided with an action plate that faces a substrate with a gap interposed therebetween. The pressure sensor 5 is adapted to detect the deflection of the action plate, when the action plate is pushed by the flange portion 4, by a piezoelectric element or the like.

As shown in Fig. 1, four elastic members 6 and four pressure sensors 5 are disposed at an interval of 90° in the circumferential direction of the flange portion 4. Since the elastic members 6 are provided, the operation body 2 is tiltably supported so that the center line CL of the operation body 2 can tilt in any direction by an angle α as shown in Fig. 4. Further, the direction and magnitude of a force, which is applied to the operation body 2 in the direction where the center line CL tilts, can be detected by any one of the four pressure sensors 5. Furthermore, when the operation body 2 is pushed directly downward, a pressing force can be detected by the four pressure sensors 5.

As shown in Figs. 1 and 2, a cover member 8 is provided around the operation body 2. The cover member 8 is made of a synthetic resin material. A hole 8a is formed at the central portion of the cover member 8. The cover member 8 has an outer peripheral surface 8c at a position away from the center line CL, and the outer peripheral surface 8c is a flat surface perpendicular to the center line CL. A concave surface 8b is formed on the surface of the cover member 8 toward the hole 8a from the outer peripheral surface 8c. The concave surface 8b is a part of a concave spherical surface of which the curvature is larger than the curvature of the spherical surface of the operation surface 3. The outer peripheral surface 8c of the surface of the cover member 8 protrudes most toward the operation side, which is operated by the finger 30, and the hole 8a is disposed at a position that retreats toward the non-operation side rather than the outer peripheral surface 8c.

The operation surface 3 of the operation body 2 is positioned within the hole 8a of the cover member 8, and a vertex 3b of the spherical surface of the operation surface 3 protrudes toward the operation side from the hole 8a. Further, the concave surface 8b is positioned so as to surround the periphery of the operation surface 3 that protrudes from the hole 8a. Accordingly, when the operation surface 3 of the operation body 2 is operated by the finger 30, the finger 30 may approach the concave surface 8b or may come into contact with the concave surface 8b.

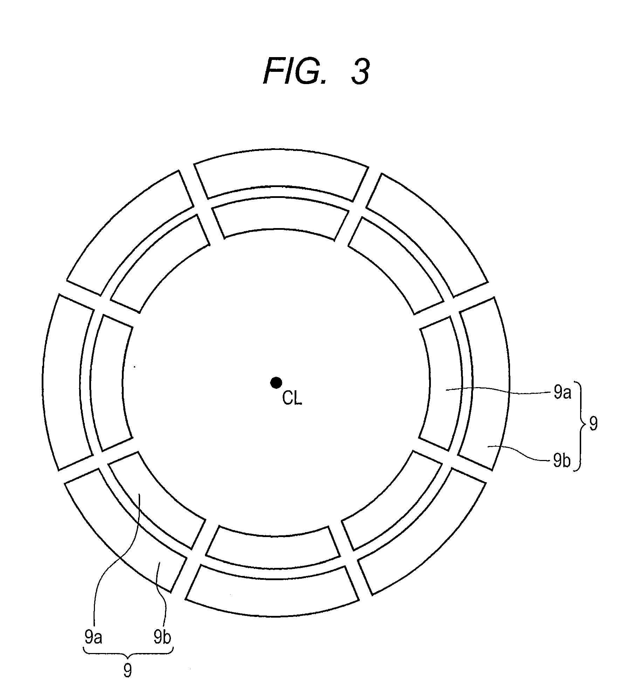

Electrostatic sensors 9, which are second detecting members, are provided on a back 8d of the cover member 8 opposite to the concave surface 8b as shown in Fig. 2. As shown in a plan view of Fig. 3, a plurality of electrostatic sensors 9 are provided and include a plurality of inner periphery-side electrostatic sensors 9a that are disposed at the positions close to the center line CL so as to surround the center line CL and a plurality of outer periphery-side electrostatic sensors 9b that are disposed at the positions away from the center line CL so as to surround the center line CL. Eight inner periphery-side electrostatic sensors 9a and eight outer periphery-side electrostatic sensors 9b are disposed at equal pitches in the circumferential direction.

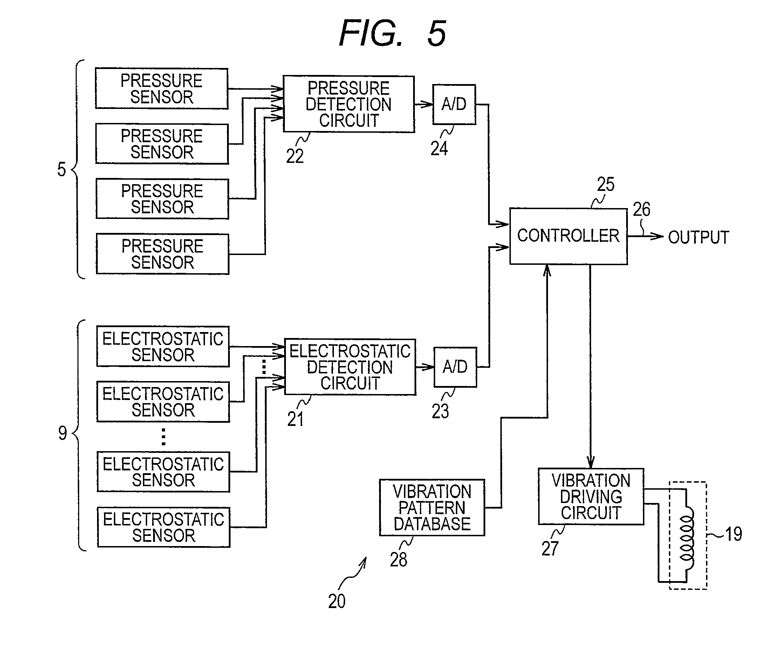

The inner periphery-side electrostatic sensors 9a and the outer periphery-side electrostatic sensors 9b include conductor layers that are independent of each other. Fig. 3 shows the disposition of the conductor layers that are provided in the respective electrostatic sensors 9. As shown in Fig. 5, an electrostatic detection circuit 21 is connected to the conductor layers of the respective electrostatic sensors 9. Pulse-shaped drive current is supplied to the conductor layers of the electrostatic sensors 9 from the electrostatic detection circuit 21. When the finger 30 approaches the conductor layers, capacitance is coupled between the finger 30 and the conductor layers and this coupling capacitance and a resistor form a delay circuit. Accordingly, the rise time of the detection current derived from the conductor layers is delayed by the pulse-shaped drive current. The rise time of this detection current is changed depending on the approach distance of the finger 30 to the conductor layers of the inner periphery-side electrostatic sensors 9a or the outer periphery-side electrostatic sensor 9b.

As shown in Fig. 5, pulse current is supplied from one electrostatic detection circuit 21 to the conductor layers of the plurality of inner periphery-side electrostatic sensors 9a and outer periphery-side electrostatic sensors 9b by turns and detection current from the respective conductor layers is detected in a time division manner by the electrostatic detection circuit 21. Accordingly, it is possible to detect which position on the surface of the operation surface 3 the finger 30 comes into contact with.

As shown in Fig. 2, the input device 1 is provided with a vibrating unit 15 that vibrates the operation body 2. The vibrating unit 15 includes a magnetic yoke 16 that is embedded in the back portion of the operation body 2, a magnet 17 that is fixed to the back portion of the magnetic yoke 16, a non-magnetic bobbin 18 that is fixed to the base 1 of the input device 1, and a coil 19 that is wound on the bobbin 18. The magnet 17 is positioned in the center hole of the bobbin 18, and upper and lower surfaces 17a and 17b of the magnet 17 are magnetized to have different magnetic polarities. When an alternating current having a predetermined cycle is supplied to the coil 19 of the vibrating unit 15, vibration of which the direction of the amplitude F is parallel to the center line CL is applied to the operation body 2.

A detection-drive circuit 20 provided in the input device 1 is shown in Fig. 5. The electrostatic detection circuit 21 is connected to the plurality of electrostatic sensors 9 as described above. Further, a pressure detection circuit 22 is connected to the pressure sensors 5 that are provided at four positions. The pressure detection circuit 22 is adapted to obtain detection outputs from each of the four pressure sensors 5 in a time division manner.

The detection outputs obtained by the electrostatic detection circuit 21 are sent to a controller 25 through an A/D converter 23, and the detection outputs obtained by the pressure detection circuit 22 are sent to the controller 25 through an A/D converter 24. The controller 25 includes memories and a CPU of a microcomputer. In the controller 25, the movement direction and movement distance of the finger 30 in contact with the operation surface 3 of the operation body 2 are calculated from the detection outputs obtained by the electrostatic detection circuit 21, and the direction in which the operation body 2 is pushed by the finger 30 is calculated from the detection outputs obtained by the pressure detection circuit 22. Then, a calculation output 26 is sent to a main controller of an electronic device mounted on the input device 1. Further, the display contents of a screen provided in the electronic device are controlled by the calculation output 26.

In the detection-drive circuit 20 shown in Fig. 5, a pulse-shaped drive command is sent to a vibration driving circuit 27 from the controller 25 and AC drive current is supplied to the coil 19 of the vibrating unit 15. A vibration pattern database 28 is stored in any one of the memories of the controller 25. Pulse wave patterns corresponding to various vibration patterns are stored in the vibration pattern database 28.

Next, the operation of the input device 1 will be described.

When the finger 30 approaches the operation surface 3 of the operation body 2, any one of the plurality of electrostatic sensors 9 detects this. Accordingly, the controller 25 can ascertain the approach of the finger 30. Further, when the finger 30 comes into contact with the operation surface 3 and the operation body 2 is lightly pushed, any one of the plurality of pressure sensors 5 detects this. Accordingly, the controller 25 can ascertain that the finger 30 comes into contact with the operation surface 3.

If the controller 25 determines that the finger approaches or comes into contact with the operation surface 3, a command is output to the vibration driving circuit 27 and drive current is supplied to the coil 19 from the vibration driving circuit 27. Accordingly, vibration is applied to the operation body 2. At this time, a pulse pattern corresponding to a continuous vibration is called from the vibration pattern database 28 by the controller 25 and is sent to the vibration driving circuit 27, so that a continuous vibration of which the amplitude F is parallel to the center line CL is applied to the operation body 2. That is, a continuous pulse, which is stored in the vibration pattern database 28 and has a predetermined frequency, is sent to the vibration driving circuit 27, so that continuing AC drive current is supplied to the coil 19. Accordingly, the operation body 2 is continuously vibrated. Here, the continuous vibration means a state where it is possible to make the finger 30 in contact with the operation surface 3 feel a continuing vibration without giving a feeling in which the vibration is disrupted or making the finger feel intermittent impact.

As a basic vibration pattern, a pulse having a constant frequency is sent to the vibration driving circuit 27 without being discontinued. It is preferable that the frequency of a pulse at this time be in the range of about 50 to 100 Hz. When the finger in contact with the operation surface 3 slides in each direction if a continuous vibration having a constant cycle is applied to the operation body 2, the operation surface 3 can make the finger 30 feel as though the operation surface is rotated according to the movement direction of the finger 30. That is, when the operation surface 3 continuously vibrates at a frequency that is felt by the finger 30, the frictional resistance force between the operation surface 3 and the finger 30 is reduced. Accordingly, when the finger 30 slides along the operation surface 3, a large resistance force is not applied to a contact portion between the finger 30 and the operation surface 3. As a result, it is possible to obtain a feeling as though the operation surface 3 is rotated as a spherical body together with the finger 30.

In particular, if the uneven surface 3a is formed on the operation surface 3 as shown in Fig. 2, a frictional force between the operation surface 3 and the finger 30 is further reduced when the operation surface 3 is vibrated. Accordingly, it is easy to obtain a feeling as though the operation surface 3 is rotated following the movement of the finger 30. The uneven surface 3a is to allow the operation surface 3 not to be in a mirror surface state and to allow the finger 30 and the operation surface 3 not to easily come into close contact with each other, and it is preferable that the center line average roughness of the uneven surface 3a be in the range of, for example, about 10 to 100 µm.

Vibration to be applied to the operation body 2 is continuously applied with a constant frequency so that the finger 30 comes into contact with any position on the operation surface 3 without discontinuity and the finger 30 contacting the operation surface 3 is moved in any direction at any speed by any distance. That is, vibration, which is stored in the vibration pattern database 28 and has a predetermined constant frequency, is continuously applied to the operation body 2 regardless of the operation position or sliding speed of the finger 30 relative to the operation surface 3.

Meanwhile, the input device disclosed in Japanese Unexamined Patent Application Publication No. 11-305938 or 2003-337649 is to apply a momentary impact force or vibration to a finger so as to give a click feeling to the finger whenever items of a screen are toggled or the finger moves by a predetermined distance. The vibration for this click feeling is persistently irregularly applied according to the operating state of the input device or the state of a screen, and is very different from a case where the vibration having a predetermined frequency is continuously applied to the operation body 2 without being restricted by the moving state of the finger 30 contacting the operation surface 3 as in the input device 1 according to the embodiment.

When the finger 30 comes into contact with the operation surface 3, it is common that a continuous vibration to be applied to the operation body 2 is a continuous vibration having a constant frequency as described above. However, the frequency of vibration may be changed according to the position where the finger 30 comes into contact with the operation surface 3. For example, when the finger 30 is moved to a position (ii) close to a skirt portion of the operation surface 3 since the finger 30 has come into contact with the vertex 3b of the operation surface 3 or come into contact with a portion (i) close to the vertex 3b as shown in Fig. 1, the frequency of vibration may be changed with the movement of the finger 30. Alternatively, when the finger 30 contacting the operation surface 3 moves along a locus (iii) close to the vertex 3b and when the finger 30 moves along a locus (iv) close to the skirt portion as shown in Fig. 1, the frequency of vibration may be changed.

However, in a case where a control for changing the frequency of vibration is to be performed when the finger 30 comes into contact with the operation surface 3, it is necessary to change the frequency during a continuous vibration so that a feeling where vibration is discontinued is not applied to the finger 30. It is preferable that the frequency of vibration in this case correspond to a continuous vibration in the range of 50 to 100 Hz as described above.

Since the operation surface 3 is a part of a spherical surface as shown in Fig. 4, the surface of the operation surface 3 is formed of an inclined surface (inclined protruding surface) that is inclined with respect to the direction of the amplitude F of a continuous vibration in a wide range except for the vertex 3b. When the finger 30 contacting the inclined surface is moved, the degree of a feeling as though the operation surface 3 is rotated following the finger 30 becomes stronger.

The center of a contact area where the finger 30 comes into contact with the operation surface 3 at a position except for the vertex 3b as shown in Fig. 4 is referred to as a contact portion T. The direction of the amplitude F of continuous vibration, which is applied to the operation surface 3 at the contact portion T, is a vertical direction, that is, a direction parallel to the center line CL. A normal line R passing though the contact portion T and a tangent line S passing though the contact portion T are shown in Fig. 4, but the inclined direction of the operation surface 3 at the contact portion T is the same as the direction of the tangent line S. Accordingly, an amplitude component Fs, which is a component force of the amplitude F of continuous vibration, continues to be applied to the contact portion T in the direction of the tangent line S.

Forces in the vertical direction, which is the direction of the amplitude F applied to the finger 30 from the operation surface 3 at the contact portion T, are +f and -f and the absolute values |f| of +f and -f are equal to each other. When the force applied to the finger 30 is +f, a component force +s, which is parallel to the direction of the tangent line S, of the force +f is applied to the finger 30 at the contact portion T. When the force applied to the finger 30 is -f, a component force -s, which is parallel to the direction of the tangent line S, of the force +f is applied to the finger 30 at the contact portion T.

When the finger 30 slides toward the flange portion 4 from the vertex 3b, a downward force W is applied to the operation surface 3 from the finger 30. Accordingly, a component force Ws in the direction of the tangent line S is applied to the operation surface 3 from the finger 30. Since the component force -s is applied in the same direction as the direction of the component force Ws of a sliding force of the finger 30, it is easy to obtain a feeling as though the operation surface 3 is rotated in the slide direction while following the sliding of the finger 30 when the finger 30 contacting the contact portion T slides toward the flange portion 4.

On the contrary, even when the finger 30 contacting the operation surface 3 slides toward the vertex 3b from the skirt portion close to the flange portion 4, the direction of a component force, which is parallel to the tangent line S, of the sliding force of the finger 30 is the same as the direction of the component force +s that is generated in the direction parallel to the tangent line S by the amplitude F of a continuous vibration. Accordingly, it is also easy to obtain a feeling as though the operation surface 3 is rotated following the movement of the finger 30.

In addition, since the operation body 2 is supported by the elastic members 6, the operation body 2 can only tilt by a small angle α as shown in Fig. 4. When the finger 30 contacting the operation surface 3 slides toward the skirt portion from the vertex 3b or slides toward the vertex 3b from the skirt portion, the operation surface 3 is moved in the slide direction by only a limited short distance corresponding to the angle α due to the force applied to the operation surface 3. It is easier to give a feeling as though the operation surface 3 is rotated to the finger 30 by the actions of both the movement of the operation surface 3 and the amplitude component Fs along the tangent line S.

The angle α at this time corresponds to a degree where the movement of the operation body 2 in the tilt direction is slightly felt, and the angle α is preferably 5° or less and more preferably 3° or less as described above.

When the finger 30 contacting the operation surface 3 slides toward the skirt portion from the vertex 3b, or slides toward the vertex 3b from the skirt portion, or slides along the locus (iii) or the locus (iv) as shown in Fig. 1, the detection output obtained from each of the inner periphery-side electrostatic sensors 9a and the outer periphery-side electrostatic sensors 9b, which are arranged in the pattern of Fig. 3, is changed. Accordingly, it is possible to perform input which is the same as the rotation of the ball of the trackball device by the change of the detection output.

Further, when the finger 30 slides on the operation surface 3, the direction and magnitude of a force applied to the operation body 2 are detected by the pressure sensors 5. It is possible to detect the slide direction of the finger 30 and a force, which is applied to the operation surface 3 at that time, even by the detection outputs.

Furthermore, it is possible to perform a switch operation, which presses the entire operation body 2 downward, by the finger 30 in contact with the vertex 3b of the operation surface 3. In this case, the controller 25 determines that the switch operation is performed when all of the four pressure sensors 5 detect a predetermined pressure. At this time, the controller 25 calls a vibration pulse having a pattern which sets the click feeling of the switch operation from the vibration pattern database 28 and sends the vibration pulse to the vibration driving circuit 27. Accordingly, drive current is supplied to the coil 19 from the vibration driving circuit 27. At this time, a continuing pulse is sent to the vibration driving circuit 27 for only a short time, so that momentary impact vibration is applied to the operation body 2. Accordingly, the finger 30 can feel an impact such that the finger receives a reaction force of the switch operation.

Vibration, which causes this switch reaction force, is irregularly generated when a switch operation is performed by the operation body 2. The vibration, which causes this switch reaction force, is different from the continuous vibration causing a feeling as though the operation surface 3 is rotated. Irregular vibration for a switch reaction force and a continuous vibration, which causes the finger to feel rotation, are applied to the operation body 2 while being superimposed.

In addition, by the vibration patterns stored in the vibration pattern database 28, as disclosed in Japanese Unexamined Patent Application Publication No. 11-305938, impact vibration may be only momentarily applied to the operation body 2 from the vibrating unit 15 when items such as a menu displayed on the screen of the electronic device are toggled, and impact vibration may be only momentarily applied to the operation body 2 from the vibrating unit 15 when a scrollbar of the screen is moved to the position of an end point of the scrollbar. Alternatively, as described in Japanese Unexamined Patent Application Publication No. 2003-337649, whenever a finger in contact with the operation surface 3 is moved along the operation surface 3 by a constant distance, that is, whenever it is felt such that the operation surface 3 is rotated by a constant distance, impact vibration may be only momentarily applied to the operation body 2 from the vibrating unit 15. In these cases, each impact vibration is applied to the operation body 2 while being superimposed on the continuous vibration causing a feeling as though the operation surface 3 is rotated.

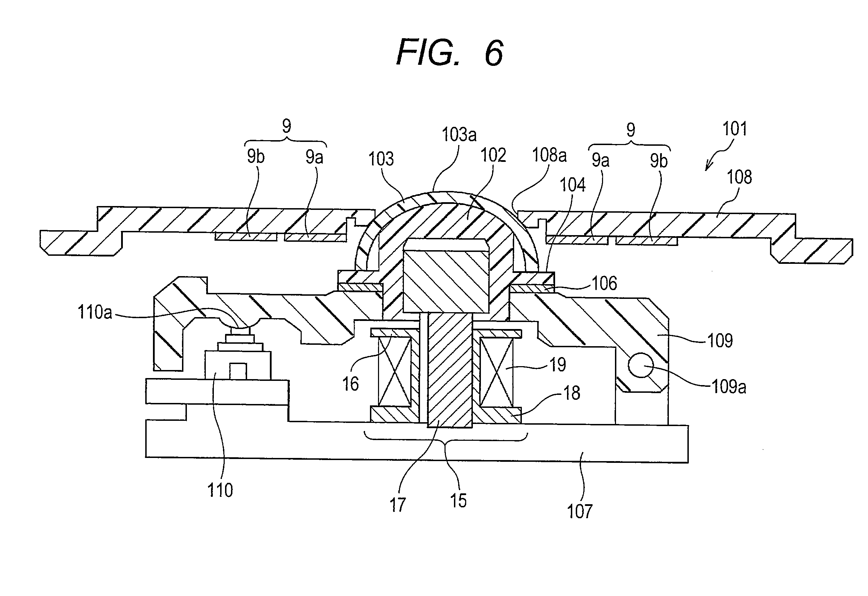

In an input device 101 according to a second embodiment shown in Fig. 6, a sheet-like electrostatic sensor 103 is mounted on the surface of an operation body 102 and the surface of the electrostatic sensor 103 forms an operation surface 103a that protrudes in the shape of a spherical surface. The operation surface 103a protrudes upward from a hole 108a of a cover member 108. The electrostatic sensor 103 includes a plurality of X electrodes and a plurality of Y electrodes that are disposed orthogonal to each other with a dielectric interposed therebetween, and the surface of the electrostatic sensor 103 is further covered with an insulating layer. When a pulse-shaped drive voltage is selectively applied to the respective electrodes and a finger having a potential close to a ground potential comes into contact with the operation surface 103a, current escapes to the finger from an electrode close to the finger. It is possible to recognize which position on the operation surface 103a the finger comes into contact with, by detecting that current is changed when which electrode a drive voltage is applied.

The same electrostatic sensors 9 as the electrostatic sensors shown in Fig. 3 are provided on the back of the cover member 108. It is possible to detect which position on the operation surface 103a the finger comes into contact with and which direction the finger slides along the operation surface 103a in, by the electrostatic sensor 103 forming the operation surface 103a and the electrostatic sensors 9 provided on the cover member 108.

A flange portion 104 of the operation body 102 is installed on a movable base 109 with an elastic member 106, which is made of synthetic rubber or a foamed resin material, interposed therebetween. The right end portion of the movable base 109 is rotatably supported through a shaft 109a by a stationary base 107. A press switch 110 is provided between a left end portion of the movable base 109 and the stationary base 107. The press switch 110 is a mechanical switch, an actuator 110a is mounted on the upper portion of the press switch 110 so as to freely move forward and backward, and the actuator 110a is pushed by a built-in spring member so as to protrude. Further, a contact with which the actuator 110a comes into contact when being pushed is provided in the press switch 110.

Furthermore, a vibrating unit 15, which has the same structure as the structure shown in Fig. 2, is provided between the stationary base 107 and the operation body 102.

When the approach of a finger is detected by the electrostatic sensor 103 and the electrostatic sensors 9, the input device 101 starts and continuing vibration is applied to the operation body 102. For this reason, when the finger slides along the operation surface 103a, it is possible to feel as though the operation surface 103a is rotated following the movement of the finger. Moreover, it is possible to find out the movement position of the finger by the electrostatic sensor 103 and the electrostatic sensors 9 and to move a cursor on a screen of an electronic device or change the screen in accordance with the movement of the finger.

Further, when the operation body 102 is pushed, the press switch 110 operates, a switch input is performed, and the feeling of a mechanical switch reaction force (click feeling) can be given to the finger pushing the operation surface 103a by a spring built in the press switch 110.

Meanwhile, the input device 101 shown in Fig. 6 may be provided with pressure sensors 5. Accordingly, when the operation surface 103a is pushed by a small force, the push of the operation surface 103a may be detected by the pressure sensors 5 and the finger may feel a switch reaction force by momentary vibration, which is applied to the operation body 102 from the vibrating unit 15. Further, when the operation surface 103a is pushed by a larger force, the press switch 110 may operate so that the finger can feel a mechanical switch reaction force.

In the input device 1 according to the first embodiment shown in Figs. 1 to 4 and the input device 101 according to the second embodiment shown in Fig. 6, the protrusion-shaped operation surfaces 3 and 103a form a part of a spherical surface. However, the protrusion-shaped operation surface is not limited to a spherical surface, and may have the shape of a convex curve. In addition, the operation surface may be formed of a part of a cylindrical surface, for example, a portion of a cylindrical surface corresponding to an angle of 180°. In this case, when a continuous vibration is applied to the operation body and a finger is moved along the operation surface, the finger can obtain a feeling as though the operation surface is rotated like a part of a roller.

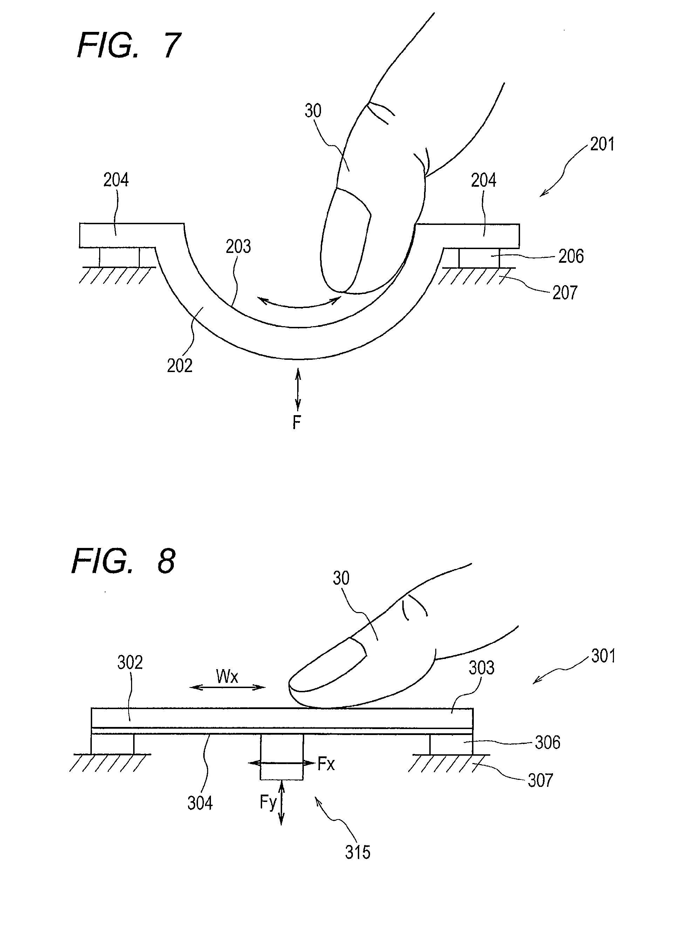

In an input device 201 according to a third embodiment shown in Fig. 7, an operation surface 203 of the surface of an operation body 202 is a concave surface and is formed of a part of a concave spherical surface, that is, a substantially hemispherical concave surface. A sheet-like electrostatic sensor is mounted on the operation surface 203 along the concave surface. The detection method of the electrostatic sensor is the same type as the electrostatic sensor 103 shown in Fig. 6. A flange portion 204 of the operation body 202 is supported by a base 207 with an elastic member 206 interposed therebetween.

A vibrating unit 15 is provided between the operation body 202 and the base 207. Accordingly, when a finger 30 comes into contact with the operation surface 203, a continuous vibration of which the amplitude F is parallel to a vertical direction is applied to the operation body 202. Therefore, when the finger 30 comes into contact with and slides on the operation surface 203 of the concave surface, it is possible to obtain a feeling as though the hemispherical concave surface is rotated following the movement of the finger 30.

In an input device 301 according to a fourth embodiment shown in Fig. 8, an operation body 302 is long and thin and an operation surface 303 of the surface of the operation body 302 has a substantially flat shape. An electrostatic sensor 304 is mounted on the back of the operation body 302. The electrostatic sensor 304 is the same type as the electrostatic sensor 103 shown in Fig. 6, and can detect a position where a finger 30 comes into contact with the operation surface 303 and the movement direction of the finger.

The operation body 302 is supported by a base 307 with an elastic member 306 interposed therebetween. A vibrating unit 315 is provided between the operation body 302 and the base 307. A continuous signal is sent to the operation body 302 by the vibrating unit 315. The direction of the amplitude of the continuous vibration is a Fy direction perpendicular to the operation surface 303 and a Fx direction parallel to the operation surface 303. A vibration having an amplitude in the Fy direction and vibration having amplitude in the Fx direction are continuously applied, and the direction of the amplitude of the composite vibration thereof is inclined with respect to the operation surface 303. That is, the operation surface 303 is formed of an inclined surface that is inclined with respect to the direction of the amplitude of vibration applied from the vibrating unit 315.

Accordingly, when the finger 30 contacting the operation surface 303 is moved along the operation surface 303 in a Wx direction, the operation surface 303 has an amplitude component parallel to the Wx direction. Accordingly, it is possible to obtain a feeling as though the operation surface 303 moves in the Wx direction while following the finger 30.

It should be understood by those skilled in the art that various modifications, combinations, sub-combinations and alterations may occur depending on design requirements and other factors insofar as they are within the scope of the appended claims of the equivalents thereof.

## Claims

1. An input device (1) comprising:
an operation body (2) that includes an operation surface (3) with which a finger (30) comes into contact and
a detecting member that detects the operating state of the operation surface (3) operated by the finger,
**characterized in that** the operation body (2) is fixed so as not to move when the finger (30) contacting the operation surface (3) moves along the operation surface (3) or the movement of the operation body (2) is restricted so as to only move by a distance shorter than a movement distance of the finger (30) that moves along the operation surface, and
a vibration applying mechanism that continues to apply a continuous vibration having a predetermined frequency to the operation body (2) while the finger (30) comes into contact with the operation surface.

2. The input device according to claim 1,
**characterized in that** the operation surface (3) has the shape of a protrusion that protrudes in a direction in which the operation surface faces to the finger (30).

3. The input device according to claim 2,
**characterized in that** the operation surface (3) is a part of a spherical surface.

4. The input device according to any of claims 1 to 3,
**characterized in that** the operation surface (3) has a concave shape that is recessed in a direction opposite to a direction in which the operation surface faces to the finger (30).

5. The input device according to any of claims 1 to 4,
**characterized in that** the operation surface (3) has a substantially flat shape.

6. The input device according to any of claims 1 to 5,
**characterized in that** the operation surface (3) is supported by an elastic body so as to only move by the distance shorter than the movement distance of the finger.

7. The input device according to any of claims 1 to 6, further comprising:
a controller that generates the continuous vibration using the vibration applying mechanism by controlling the vibration applying mechanism, and applies an irregular vibration to the operation body (2) from the vibration applying mechanism when a predetermined operation is performed by the finger.

8. The input device according to any of claims 1 to 7,
**characterized in that** a continuous vibration, which includes an amplitude component parallel to a movement direction of the finger (30) on the operation surface, is applied to the operation body (2) from the vibration applying mechanism.

9. The input device according to claim 8,
**characterized in that** the operation surface (3) includes an inclined surface, which is inclined with respect to the direction of the amplitude (F) of the continuous vibration applied to the operation body (2) from the vibration applying mechanism, on at least a part thereof.

10. The input device according to any of claims 1 to 9,
**characterized in that** the detecting members are pressure sensors detecting that the operation surface (3) is pushed by the finger.

11. The input device according to any one of claims 1 to 9,
**characterized in that** the detecting members are electrostatic sensors that detect the approach and movement of the finger.
